# EUROPEAN PATENT APPLICATION

(11) **EP 4 700 733 A1**
(43) Date of publication of application: **25.02.2026**
(21) Application number: 25194183.7
(22) Date of filing: 05.08.2025
(51) Int. Cl.: G08B 13/196, G08B 29/18

(54) **AUTOMATED ASSOCIATION OF SENSORS AND CAMERAS IN A SECURITY SYSTEM**

(30) Priority: 19.08.2024 US 202418808989
(71) Applicant: Honeywell International Inc., Charlotte, NC 28202 (US)
(72) Inventor: HUBERT, Benitta, Charlotte, 28202 (US); GANESAN, Balamurugan, Charlotte, 28202 (US); BALL, Stuart Bryan, Charlotte, 28202 (US)
(74) Representative: Haseltine Lake Kempner LLP

(57) **Abstract**

A controller (14) defines a sensor Field Of View, FOV, for each sensor (12a-12c) based on sensor characteristics and a camera Field Of View, FOV, for each camera (16a-16c) based on camera characteristics. The controller determines a degree of overlap between each sensor FOV and each camera FOV and automatically determines a sensor-camera association between each sensor and one or more cameras and stores the sensor-camera association. In response to a particular sensor detecting an alarm condition in the facility, the security system (10) references the sensor-camera association to identify one or more cameras that are associated with the particular sensor, and automatically displays a video stream captured by one or more of the cameras that are associated with the particular sensor on an operator console (22) of the security system.

## Description

### TECHNICAL FIELD

The present disclosure relates generally to security systems. More particularly, the present disclosure relates to security systems that include both security sensors and video cameras.

### BACKGROUND

A number of security systems employ both security sensors and video cameras that are each disposed about a facility that is being protected by the security system. When one of the security sensors indicate a potential problem, it can be desirable to utilize a corresponding video camera to either confirm or disprove the potential problem. A security system may include hundreds or even thousands of security sensors, and may include hundreds of video cameras. Determining which video camera should be associated with a particular security sensor can be a daunting task, requiring substantial manual data entry. The substantial manual data entry can lead to errors, and its accuracy can be dependent upon the skill and experience of the person making the association decisions and accompanying data entry. What would be desirable are methods and systems for automatically determining how each sensor and each video camera should be associated together so that when there is a need to confirm an indication from a particular sensor, the correct video camera is easily ascertained.

### SUMMARY

The present disclosure relates generally to security systems and more particularly, to security systems that include both security sensors and video cameras. An example may be found in a method for automatically configuring a sensor-camera association between each of a plurality of sensors and one or more of a plurality of cameras of a security system of a facility. The illustrative method includes a controller receiving a floor map of at least part of the facility that identifies a physical mounting location of each of the plurality of sensors and each of the plurality of cameras of the security system. The controller receives one or more sensor characteristics of each of the plurality of sensors and receives one or more camera characteristics of each of the plurality of cameras. The controller defines a sensor Field Of View (FOV) of each of the plurality of sensors relative to the floor map based at least in part on the one or more sensor characteristics and defines a camera Field Of View (FOV) of each of the plurality of cameras relative to the floor map based at least in part on the one or more camera characteristics. For each of the plurality of sensors, the controller determines a degree of overlap between the respective sensor FOV and each camera FOV of the plurality of cameras. The controller determines the sensor-camera association between each sensor of the plurality of sensors and one or more of the plurality of cameras based at least in part on the degree of overlap between the sensor FOV of the respective sensor and each camera FOV of the plurality of cameras and stores the sensor-camera association for subsequent use by the security system. During subsequent use of the security system, and in response to a particular sensor of the plurality of sensors detecting an alarm condition in the facility, the security system references the sensor-camera association to identify one or more cameras of the plurality of cameras of the security system that are associated with the particular sensor, and automatically displays a video stream captured by one or more of the cameras that are associated with the particular sensor on an operator console of the security system.

Another example may be found in a configuration tool for automatically configuring a sensor-camera association between each of a plurality of sensors and one or more of a plurality of cameras of a security system of a facility. The illustrative configuration tool includes an input that receives a floor map of at least part of the facility identifying a physical mounting location of each of the plurality of sensors and each of the plurality of cameras of the security system. The input receives one or more sensor characteristics of each of the plurality of sensors and one or more camera characteristics of each of the plurality of cameras. A controller is operatively coupled to the input and is configured to define a sensor Field Of View (FOV) of each of the plurality of sensors relative to the floor map based at least in part on the one or more sensor characteristics and to define a camera Field Of View (FOV) of each of the plurality of cameras relative to the floor map based at least in part on the one or more camera characteristics. For each of the plurality of sensors, the controller is configured to determine a degree of overlap between the respective sensor FOV and each camera FOV of the plurality of cameras. The controller is configured to determine the sensor-camera association between each sensor of the plurality of sensors and one or more of the plurality of cameras based at least in part on the degree of overlap between the sensor FOV of the respective sensor and each camera FOV of the plurality of cameras and to store the sensor-camera association for subsequent use by the security system. During subsequent use of the security system, and in response to a particular sensor of the plurality of sensors detecting an alarm condition in the facility, the security system is configured to reference the sensor-camera association to identify one or more cameras of the plurality of cameras of the security system that are associated with the particular sensor, and automatically display a video stream captured by one or more of the cameras that are associated with the particular sensor on an operator console of the security system.

Another example may be found in a non-transitory computer readable medium storing instructions thereon. When the instructions are executed by one or more processors, the one or more processors are caused to receive a floor map of at least part of a facility, the floor map identifying a physical mounting location of each of a plurality of sensors and each of a plurality of cameras of a security system of the facility. The one or more processors are caused to receive one or more sensor characteristics of each of the plurality of sensors and to receive one or more camera characteristics of each of the plurality of cameras. The one or more processors are caused to define a sensor Field Of View (FOV) of each of the plurality of sensors relative to the floor map based at least in part on the one or more sensor characteristics and to define a camera Field Of View (FOV) of each of the plurality of cameras relative to the floor map based at least in part on the one or more camera characteristics. For each of the plurality of sensors, the one or more processors are caused to determine a degree of overlap between the respective sensor FOV and each camera FOV of the plurality of cameras. The one or more processors are caused to determine a sensor-camera association between each sensor of the plurality of sensors and one or more of the plurality of cameras based at least in part on the degree of overlap between the sensor FOV of the respective sensor and each camera FOV of the plurality of cameras and to store the sensor-camera association for subsequent use by the security system. During subsequent use of the security system, and in response to a particular sensor of the plurality of sensors detecting an alarm condition in the facility, the security system references the sensor-camera association to identify one or more cameras of the plurality of cameras of the security system that are associated with the particular sensor, and automatically display a video stream captured by one or more of the cameras that are associated with the particular sensor on an operator console of the security system.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative security system;
Figure 2 is a schematic block diagram showing some of the information that is provided to the illustrative security system of Figure 1;
Figures 3A, 3B, 3C, 3D and 3E are flow diagrams that together show an illustrative method for automatically configuring a sensor-camera association for each of a number of sensors and cameras within the illustrative security system of Figure 1;
Figure 4 is a flow diagram showing an illustrative series of steps that may be carried out by one or more processors that are executing instructions stored on a non-transient computer readable medium;
Figure 5 is a flow diagram showing an illustrative method;
Figure 6 is a schematic floor map showing overlap between motion sensors and camera coverage; and
Figure 7 is a schematic floor map showing blind spots.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

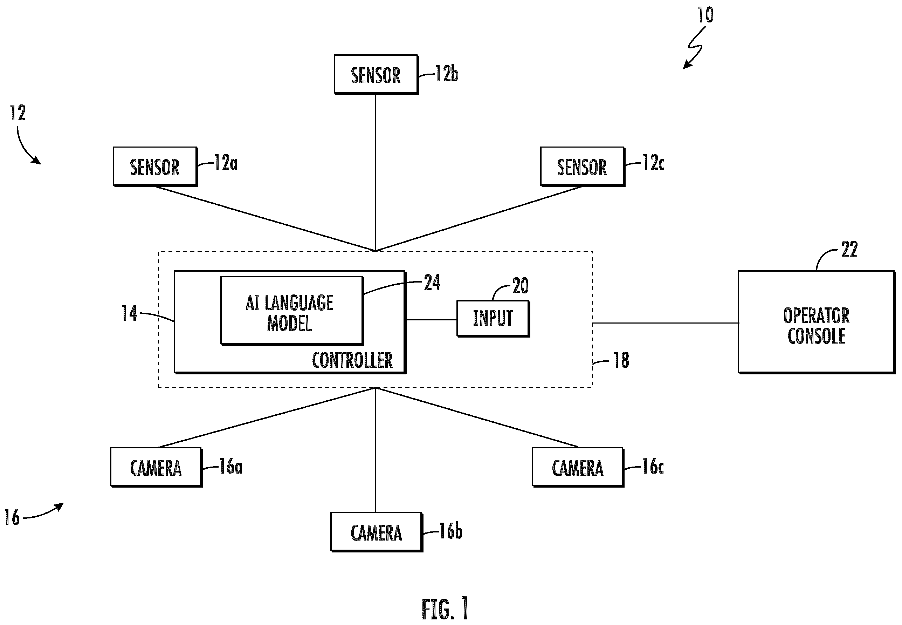

Figure 1 is a schematic block diagram showing an illustrative security system 10. The illustrative security system 10 may include a number of sensors 12, individually labeled as 12a, 12b and through 12n. The security system 10 may include tens, hundreds or even thousands of sensors 12. The security system 10 may include a variety of different types of sensors 12, such as window open sensors, door open sensors, glass break detectors, motion detectors, fire sensors, smoke sensors, gas sensors and the like. The sensors 12 may be battery-powered. In some cases, each of the wireless security sensors 12 may communicate with a controller 14 over any of a variety of different wireless communication protocols. In some cases, the controller 14 may be a security system controller. The security system 10 may include a number of cameras 16, individually labeled as 16a, 16b and 16c. The security system 10 may include tens, hundreds or even thousands of cameras 16. The cameras 16 may include video cameras 16 having a fixed Field of View (FOV). The cameras 16 may include video cameras 16 such as PTZ (Pan, Tilt and Zoom) cameras having a variable FOV. The cameras 16 may communicate with the controller 14 over a wired or wireless network, for example.

In some cases, the controller 14 may include a configuration tool. For example, the configuration tool may be an application running on the controller 14 of the security system. In some cases, the configuration tool may be running on a mobile device or other computing device that is separate from the controller 14 but in communication with the controller 14. Regardless of implementation, the configuration tool 18 may be configured to automatically configure a sensor-camera association between each of the sensors 12 and one or more of the cameras 16. These sensor-camera associations may subsequently be used by the security system 10 to determine which of the cameras 16 is best positioned to be used to confirm or deny a possible event that is indicated by a particular sensor 12. In addition to the controller 14, the configuration tool 18 includes an input 20 that is able to receive a floor map of at least part of the facility that identifies a physical mounting location of each of the plurality of sensors 12 and each of the plurality of cameras 16 of the security system 10. In some cases, the input 20 may be a computer port that is able to receive information from a remote source. As an example, the input 20 may be an Ethernet port. In some cases, the input 20 may be considered as being a logical input. The input 20 is configured to receive one or more sensor characteristics for each of the sensors 12. The input 20 is configured to receive one or more camera characteristics of each of the cameras 16. In some cases, the sensors 12 and/or the cameras 16 may communicate with the controller 14 via the input 20. In some cases, the sensors 12 and/or the cameras 16 may communicate with the controller 14 via one or more inputs (not shown) such as network inputs, particularly if the sensors 12 and/or the cameras 16 are networked. In some cases, part or all of the controller 14 may be implemented on a cloud based server.

The controller 14 is configured to define a sensor Field Of View (FOV) for each of the plurality of sensors 12 relative to the floor map based at least in part on the one or more sensor characteristics, and to define a camera Field Of View (FOV) of each of the plurality of cameras 16 relative to the floor map based at least in part on the one or more camera characteristics. For each of the plurality of sensors 12, the controller 14 is configured to determine a degree of overlap between the respective sensor FOV and each camera FOV of the plurality of cameras. The controller 14 is configured to determine the sensor-camera association between each sensor 12 of the plurality of sensors and one or more of the plurality of cameras 16 based at least in part on the degree of overlap between the sensor FOV of the respective sensor 12 and each camera FOV of the plurality of cameras 16. For example, if a sensor FOV and a camera FOV overlap by at least a threshold amount, a sensor-camera association may be identified. The controller 14 is configured to store the sensor-camera association for subsequent use by the security system 10. During subsequent use of the security system 10, and in response to a particular sensor 12 of the plurality of sensors 12 detecting an alarm condition in the facility, the security system 10 is configured to reference the sensor-camera association to identify one or more cameras 16 of the plurality of cameras 16 of the security system 10 that are associated with the particular sensor 12, and automatically display a video stream captured by one or more of the cameras 16 that are associated with the particular sensor on an operator console 22 of the security system 10.

In some cases, the configuration tool 18 may include an Artificial Intelligence (AI) language model 24. In some cases, the AI language model 24 may be part of the controller 14. In some cases, the AI language model 24 may be a separate component. In some cases, the AI language model 24 may be remote from the controller 14. The AI language model 24 may be configured to receive various information, including but not limited to a part number for each of the plurality of sensors 12, a part number for each of the plurality of cameras 16 and/or one or more of a product manual, a data sheet and a brochure for each of the part numbers of the plurality of sensors 12 and each of the part numbers for the plurality of cameras 16. The AI language model may be configured to determine one or more of the sensor characteristics of each of the plurality of sensors 12 (e.g. sensor FOV) and one or more of the camera characteristics of each of the plurality of cameras 16 (e.g. Camera FOV), and to provide the one or more of the sensor characteristics of each of the plurality of sensors 12 and the one or more of the camera characteristics of each of the plurality of cameras 16 to the input 20 for use by the controller 14.

In some instances, the controller 14 may be configured to determine the sensor-camera association between each sensor 12 of the plurality of sensors 12 and one or more of the plurality of cameras 16 based at least in part on the degree of overlap between the sensor FOV of the respective sensor 12 and each camera FOV of the plurality of cameras 16, along with one or more other camera characteristics. The one or more other camera characteristics may include, for example, one or more of a frame rate of each of the two or more of the plurality of cameras 16, a resolution of each of the two or more of the plurality of cameras 16, a PTZ functionality of each of the two or more of the plurality of cameras 16, if any, and a video analytics capability of each of the two or more of the plurality of cameras 16.

In some instances, the controller 14 may be configured to determine one or more parameters for each of one or more of the plurality of sensors 12 that are based at least in part on one or more of the sensor characteristics. The controller 14 may be configured to automatically populate the security system 10 with the one or more parameters for each of one or more of the plurality of sensors 12. In some cases, the one or more parameters for each of the one or more of the plurality of sensors may include, for example, one or more of a mask detection parameter, an alarm transmit parameter, a sensitivity parameter, and a dual sensing parameter. In some cases, the controller 14 may be configured to determine one or more parameters for each of one or more of the plurality of cameras 16 based at least in part on one or more of the camera characteristics. The controller 14 may be configured to automatically populate the security system 10 with the one or more parameters for each of one or more of the plurality of cameras 16. In some cases, the one or more parameters for each of the one or more of the plurality of cameras may include one or more of a video analytics type parameter, a PTZ capability parameter, a resolution parameter, a frame rate parameter, a privacy masking parameter, and a Night vision parameter. The security system 10 may utilize the one or more parameters for each of the one or more of the plurality of sensors 12 and the one or more parameters for each of the one or more of the plurality of cameras 16 during subsequent operation of the security system 10.

In some instances, the controller 14 may be configured to determine one or more blind spots in at least part of the facility by identifying those regions of the floor map that are not covered by the sensor Field Of View (FOV) of any of the plurality of sensors 12 and/or are not covered by the camera Field Of View (FOV) of any of the plurality of cameras 16. The controller 14 may be configured to display a recommendation on the operator console 22 to add one or more particular sensors 12 and/or one or more particular cameras 16 at particular physical mounting locations in the facility based at least in part on the determining one or more blind spots.

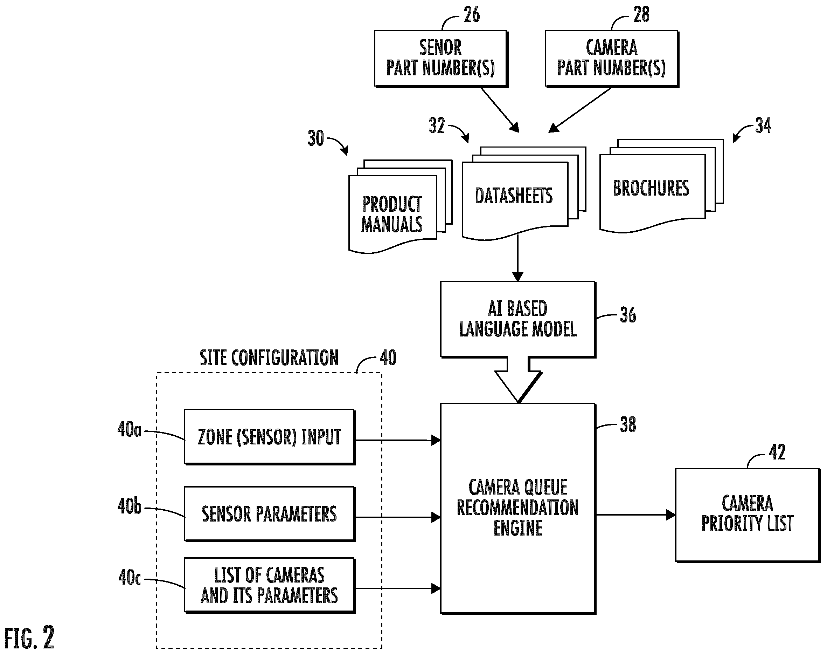

Figure 2 is a schematic block diagram showing some of the information that is provided to the illustrative security system 10. Sensor part numbers, as shown at block 26, and camera part numbers, as shown at block 28, allow additional information to be found in other information sources and utilized in determining sensor-camera associations. The other information sources include, for example, product manuals, as indicated at blocks 30, datasheets, as indicated at blocks 32, and brochures, as indicated at blocks 34. The other information sources may be provided to an AI language model, as indicated at block 36. The AI language model indicated at block 36 may be considered as being an example of the AI language model 24. The AI language model extracts relevant information for use by a Recommendation Engine 38. The Recommendation Engine 38 may also receive information from a site configuration 40. This information includes zone (sensor) input, as indicated at block 40a, sensor parameters, as indicated at block 40b, and camera information, as indicated at block 40c. The Recommendation Engine 38 may use this information in conjunction with the information provided by the AI language model 36, to determining the sensor-camera associations. In response to a sensor alarm condition, the Recommendation Engine 38 may reference the sensor-camera associations to identify a camera priority list, as indicated at block 42 that identifies one or more of the cameras that can be used to verify the alarm condition of the sensor.

In some cases, the sensor-camera association may include an association between two or more cameras of the plurality of cameras and a particular sensor of the plurality of sensors, and wherein the sensor-camera association may include a prioritization of the two or more of the plurality of cameras that are associated with the particular sensor of the plurality of sensors. During subsequent use of the security system, and in response to the particular sensor of the plurality of sensors detecting the alarm condition in the facility, the security system may reference the stored sensor-camera association to identify the two or more cameras of the plurality of cameras of the security system that are associated with the particular sensor, and automatically prioritizing display of the video stream captured by the camera with a highest priority.

In some cases, the prioritization of the two or more of the plurality of cameras may be based at least in part on the degree of overlap between the sensor FOV of the particular sensor and each of the two or more of the plurality of cameras that are associated with the particular sensor. In some cases, the prioritization of the two or more of the plurality of cameras may be based at least in part on one or more of the camera characteristics including one or more of a frame rate of each of the two or more of the plurality of cameras, a resolution of each of the two or more of the plurality of cameras, a PTZ functionality of each of the two or more of the plurality of cameras, if any, and a video analytics capability of each of the two or more of the plurality of cameras. In some cases, the controller may determine the sensor-camera association between each sensor of the plurality of sensors and one or more of the plurality of cameras based at least in part on the degree of overlap between the sensor FOV of the respective sensor and each camera FOV of the plurality of cameras and one or more of the camera characteristics including one or more of a frame rate of each of the two or more of the plurality of cameras, a resolution of each of the two or more of the plurality of cameras, a PTZ functionality of each of the two or more of the plurality of cameras, if any, and a video analytics capability of each of the two or more of the plurality of cameras. These are just examples.

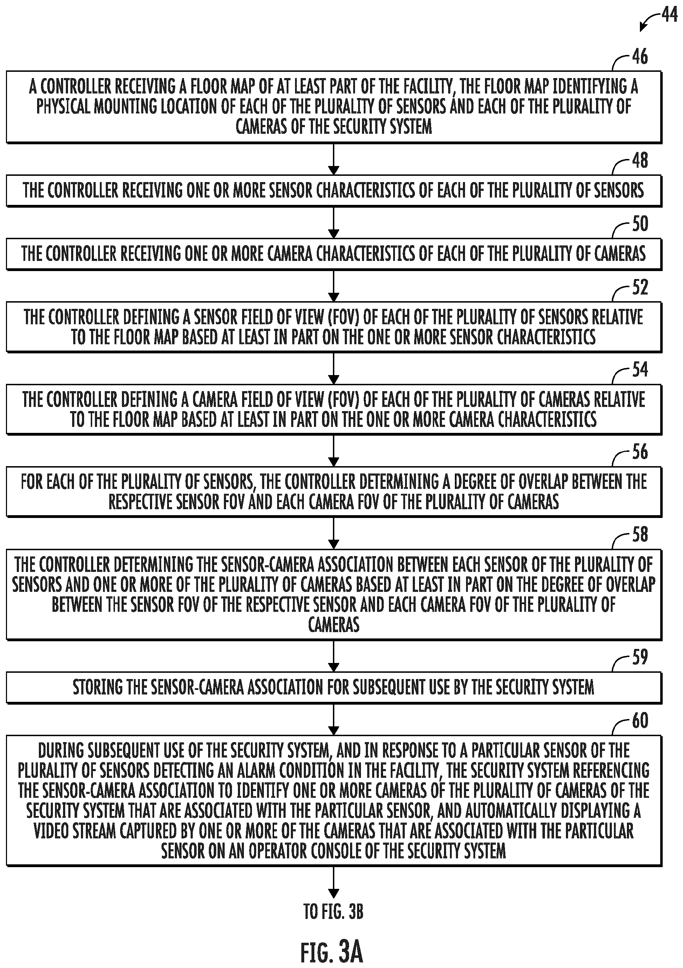

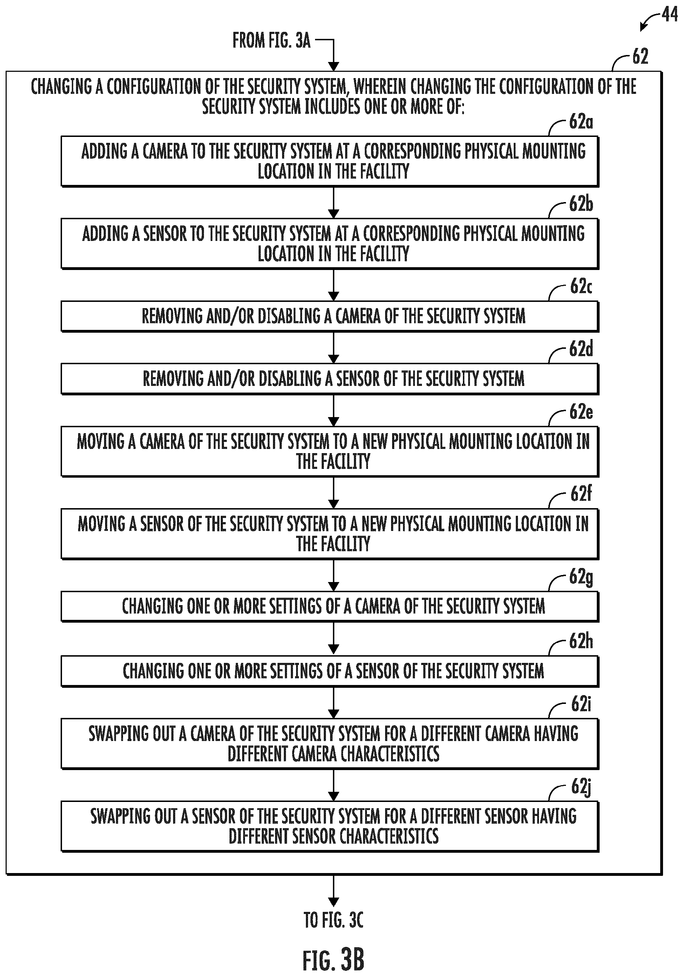

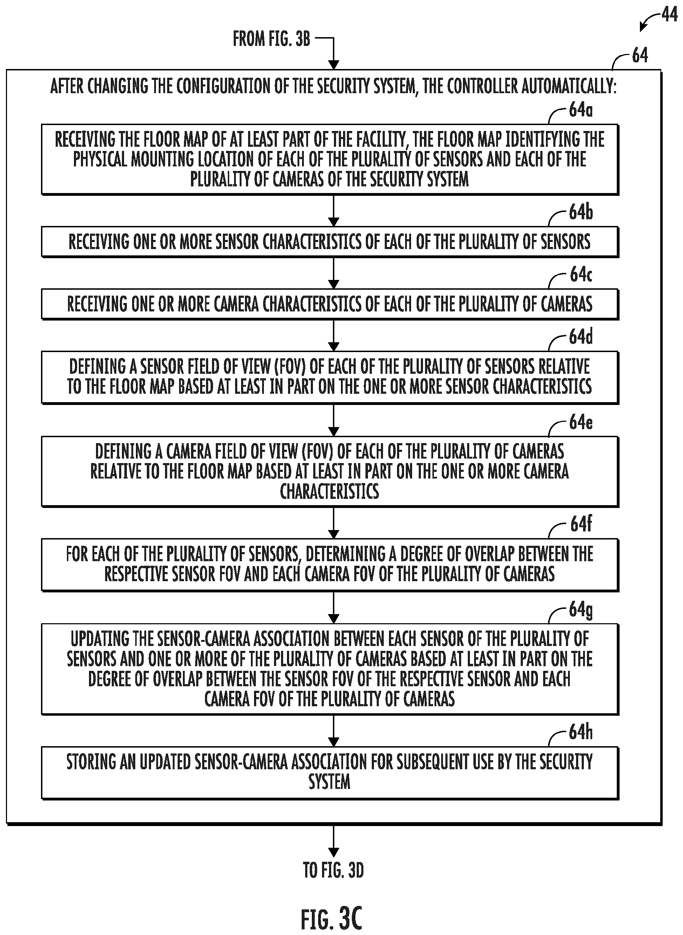

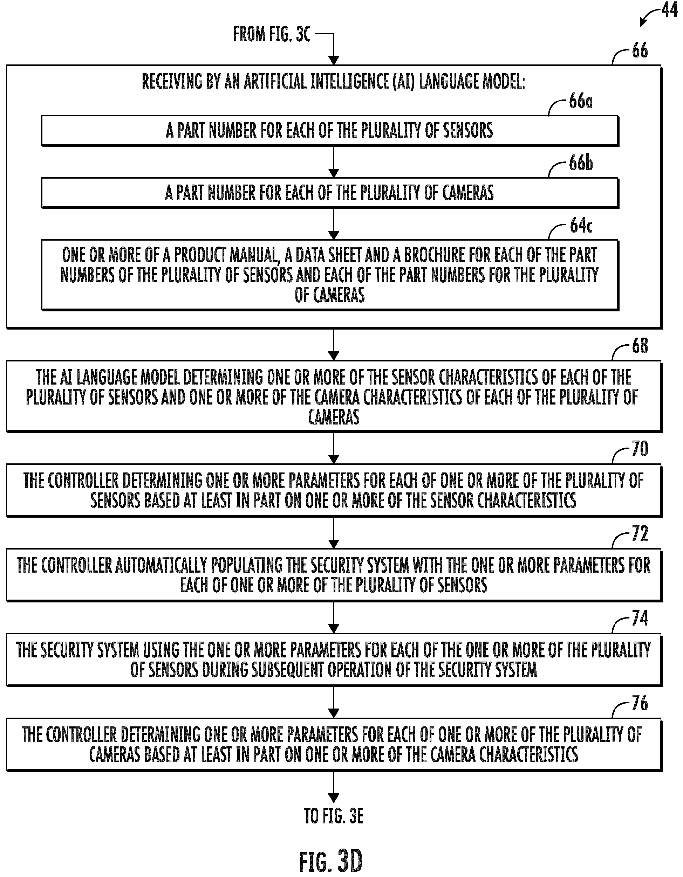

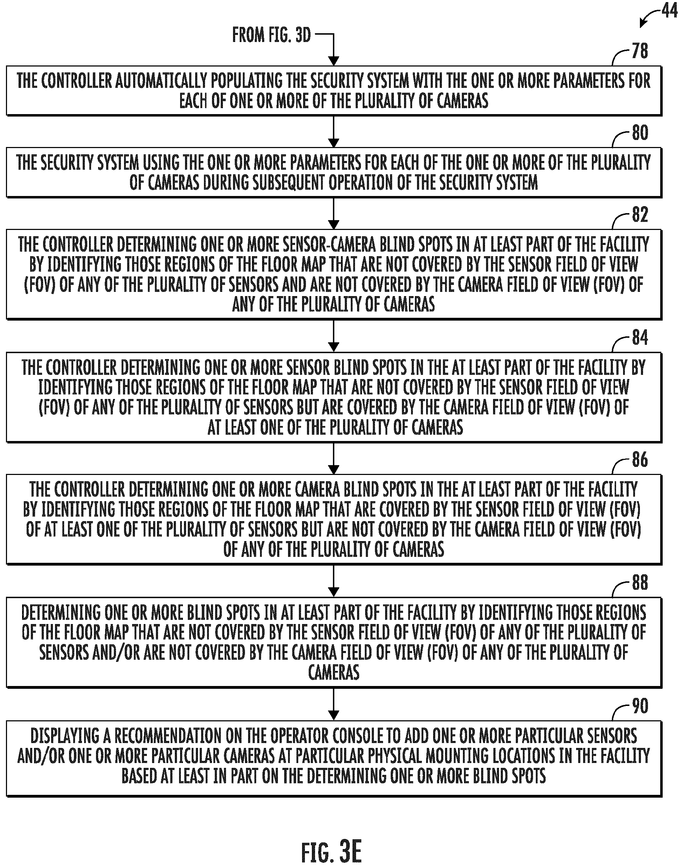

Figures 3A, 3B, 3C, 3D and 3E are flow diagrams that together show an illustrative method 44 for automatically configuring a sensor-camera association for each of a number of sensors (such as the sensors 12) and cameras (such as the cameras 16) within a security system (such as the security system 10). The illustrative method 44 includes a controller (such as the controller 14) receiving a floor map of at least part of the facility, the floor map identifying a physical mounting location of each of the plurality of sensors and each of the plurality of cameras of the security system, as indicated at block 46. The controller receives one or more sensor characteristics of each of the plurality of sensors, as indicated at block 48. The controller receives one or more camera characteristics of each of the plurality of cameras, as indicated at block 50. The controller defines a sensor Field Of View (FOV) of each of the plurality of sensors relative to the floor map based at least in part on the one or more sensor characteristics, as indicated at block 52. The controller defines a camera Field Of View (FOV) of each of the plurality of cameras relative to the floor map based at least in part on the one or more camera characteristics, as indicated at block 54. For each of the plurality of sensors, the controller determines a degree of overlap between the respective sensor FOV and each camera FOV of the plurality of cameras, as indicated at block 56. The controller determines the sensor-camera association between each sensor of the plurality of sensors and one or more of the plurality of cameras based at least in part on the degree of overlap between the sensor FOV of the respective sensor and each camera FOV of the plurality of cameras, as indicated at block 58. The controller stores the sensor-camera association for subsequent use by the security system, as indicated at block 59. During subsequent use of the security system, and in response to a particular sensor of the plurality of sensors detecting an alarm condition in the facility, the security system references the sensor-camera association to identify one or more cameras of the plurality of cameras of the security system that are associated with the particular sensor, and automatically displays a video stream captured by one or more of the cameras that are associated with the particular sensor on an operator console of the security system, as indicated at block 60.

Continuing on Figure 3B, the illustrative method 44 may further include changing a configuration of the security system, as indicated at block 62. Changing the configuration of the security system may include adding a camera to the security system at a corresponding physical mounting location in the facility, as indicated at block 62a. Changing the configuration of the security system may include adding a sensor to the security system at a corresponding physical mounting location in the facility, as indicated at block 62b. Changing the configuration of the security system may include removing and/or disabling a camera of the security system, as indicated at block 62c. Changing the configuration of the security system may include removing and/or disabling a sensor of the security system, as indicated at block 62d. Changing the configuration of the security system may include moving a camera of the security system to a new physical mounting location in the facility, as indicated at block 62e. Changing the configuration of the security system may include moving a sensor of the security system to a new physical mounting location in the facility, as indicated at block 62f. Changing the configuration of the security system may include changing one or more settings of a camera of the security system, as indicated at block 62g. Changing the configuration of the security system may include changing one or more settings of a sensor of the security system, as indicated at block 62h. Changing the configuration of the security system may include swapping out a camera of the security system for a different camera having different camera characteristics, as indicated at block 62i. Changing the configuration of the security system may include swapping out a sensor of the security system for a different sensor having different sensor characteristics, as indicated at block 62j.

Continuing on Figure 3C, and after changing the configuration of the security system, the controller automatically takes several actions, as indicated at block 64. The controller automatically receives the floor map of at least part of the facility, the floor map identifying the physical mounting location of each of the plurality of sensors and each of the plurality of cameras of the security system, as indicated at block 64a. The controller automatically receives one or more sensor characteristics of each of the plurality of sensors, as indicated at block 64b. The controller automatically receives one or more camera characteristics of each of the plurality of cameras, as indicated at block 64c. The controller automatically defines a sensor Field Of View (FOV) of each of the plurality of sensors relative to the floor map based at least in part on the one or more sensor characteristics, as indicated at block 64d. The controller automatically defines a camera Field Of View (FOV) of each of the plurality of cameras relative to the floor map based at least in part on the one or more camera characteristics, as indicated at block 64e. For each of the plurality of sensors, the controller automatically determines a degree of overlap between the respective sensor FOV and each camera FOV of the plurality of cameras, as indicated at block 64f. The controller automatically updates the sensor-camera association between each sensor of the plurality of sensors and one or more of the plurality of cameras based at least in part on the degree of overlap between the sensor FOV of the respective sensor and each camera FOV of the plurality of cameras, as indicated at block 64g. The controller automatically stores an updated sensor-camera association for subsequent use by the security system, as indicated at block 64h.

Continuing on Figure 3D, the illustrative method 44 may further include an Artificial Intelligence (AI) language model (such as the AI language model 24) receiving information, as indicated at block 66. The AI language model may receive a part number for each of the plurality of sensors, as indicated at block 66a. The AI language model may receive a part number for each of the plurality of cameras, as indicated at block 66b. The AI language model may receive one or more of a product manual, a data sheet and a brochure for each of the part numbers of the plurality of sensors and each of the part numbers for the plurality of cameras, as indicated at block 66c. In some cases, the AI language model determines one or more of the sensor characteristics of each of the plurality of sensors and one or more of the camera characteristics of each of the plurality of cameras, as indicated at block 68.

In some cases, the illustrative method 44 may further include the controller determining one or more parameters for each of one or more of the plurality of sensors based at least in part on one or more of the sensor characteristics, as indicated at block 70. The controller may automatically populate the security system with the one or more parameters for each of one or more of the plurality of sensors, as indicated at block 72. The security system may use the one or more parameters for each of the one or more of the plurality of sensors during subsequent operation of the security system, as indicated at block 74. In some cases, the one or more parameters for each of the one or more of the plurality of sensors may include one or more of a mask detection parameter, an alarm transmit parameter, a sensitivity parameter, and a dual sensing parameter. In some cases, the method 44 may include the controller determining one or more parameters for each of one or more of the plurality of cameras based at least in part on one or more of the camera characteristics, as indicated at block 76.

Continuing on Figure 3E, the controller may automatically populate the security system with the one or more parameters for each of one or more of the plurality of cameras, as indicated at block 78. The security system may use the one or more parameters for each of the one or more of the plurality of cameras during subsequent operation of the security system, as indicated at block 80. In some cases, the one or more parameters for each of the one or more of the plurality of cameras may include one or more of a video analytics type parameter, a PTZ capability parameter, a resolution parameter, a frame rate parameter, a privacy masking parameter, and a Night vision parameter.

In some cases, the illustrative method 44 may further include the controller determining one or more sensor-camera blind spots in at least part of the facility by identifying those regions of the floor map that are not covered by the sensor Field Of View (FOV) of any of the plurality of sensors and are not covered by the camera Field Of View (FOV) of any of the plurality of cameras, as indicated at block 82. The controller may determine one or more sensor blind spots in the at least part of the facility by identifying those regions of the floor map that are not covered by the sensor Field Of View (FOV) of any of the plurality of sensors but are covered by the camera Field Of View (FOV) of at least one of the plurality of cameras, as indicated at block 84. The controller may determine one or more camera blind spots in the at least part of the facility by identifying those regions of the floor map that are covered by the sensor Field Of View (FOV) of at least one of the plurality of sensors but are not covered by the camera Field Of View (FOV) of any of the plurality of cameras, as indicated at block 86. In some cases, the method 44 may further include determining one or more blind spots in at least part of the facility by identifying those regions of the floor map that are not covered by the sensor Field Of View (FOV) of any of the plurality of sensors and/or are not covered by the camera Field Of View (FOV) of any of the plurality of cameras, as indicated at block 88. A recommendation may be displayed on the operator console to add one or more particular sensors and/or one or more particular cameras at particular physical mounting locations in the facility based at least in part on the determining one or more blind spots, as indicated at block 90.

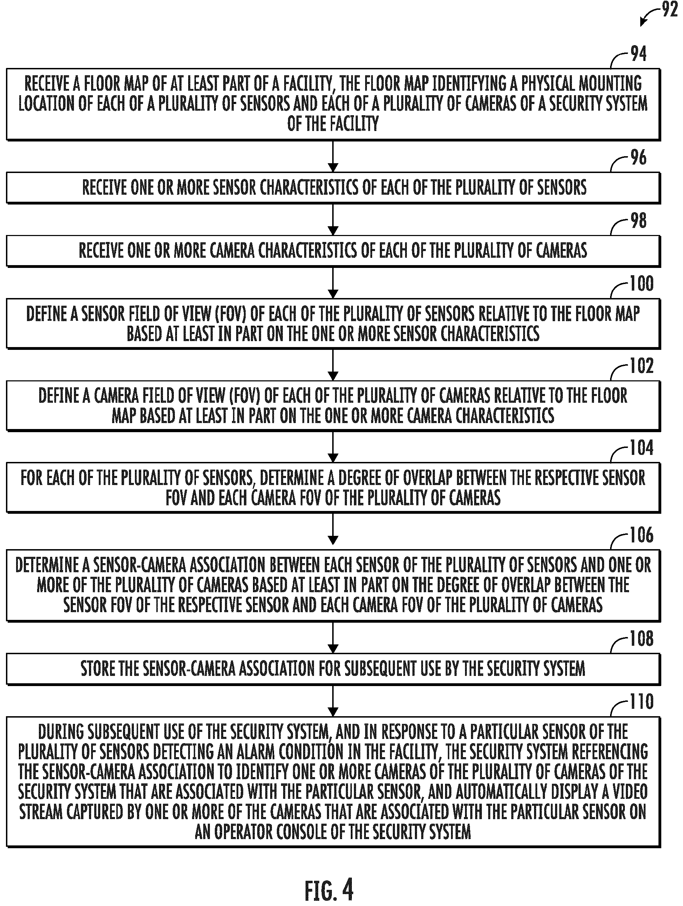

Figure 4 is a flow diagram showing an illustrative series of steps 92 that may be carried out by one or more processors that are executing instructions stored on a non-transient computer readable medium. The one or more processors may be part of the controller 14, for example. The one or more processors may be caused to receive a floor map of at least part of a facility, the floor map identifying a physical mounting location of each of a plurality of sensors and each of a plurality of cameras of a security system of the facility, as indicated at block 94. The one or more processors may be caused to receive one or more sensor characteristics of each of the plurality of sensors, as indicated at block 96. The one or more processors may be caused to receive one or more camera characteristics of each of the plurality of cameras, as indicated at block 98. The one or more processors may be caused to define a sensor Field Of View (FOV) of each of the plurality of sensors relative to the floor map based at least in part on the one or more sensor characteristics, as indicated at block 100. The one or more processors may be caused to define a camera Field Of View (FOV) of each of the plurality of cameras relative to the floor map based at least in part on the one or more camera characteristics, as indicated at block 102. For each of the plurality of sensors, the one or more processors may be caused to determine a degree of overlap between the respective sensor FOV and each camera FOV of the plurality of cameras, as indicated at block 104. The one or more processors may be caused to determine a sensor-camera association between each sensor of the plurality of sensors and one or more of the plurality of cameras based at least in part on the degree of overlap between the sensor FOV of the respective sensor and each camera FOV of the plurality of cameras, as indicated at block 106. The one or more processors may be caused to store the sensor-camera association for subsequent use by the security system, as indicated at block 108. During subsequent use of the security system, and in response to a particular sensor of the plurality of sensors detecting an alarm condition in the facility, the security system may reference the sensor-camera association to identify one or more cameras of the plurality of cameras of the security system that are associated with the particular sensor, and may automatically display a video stream captured by one or more of the cameras that are associated with the particular sensor on an operator console of the security system, as indicated at block 110.

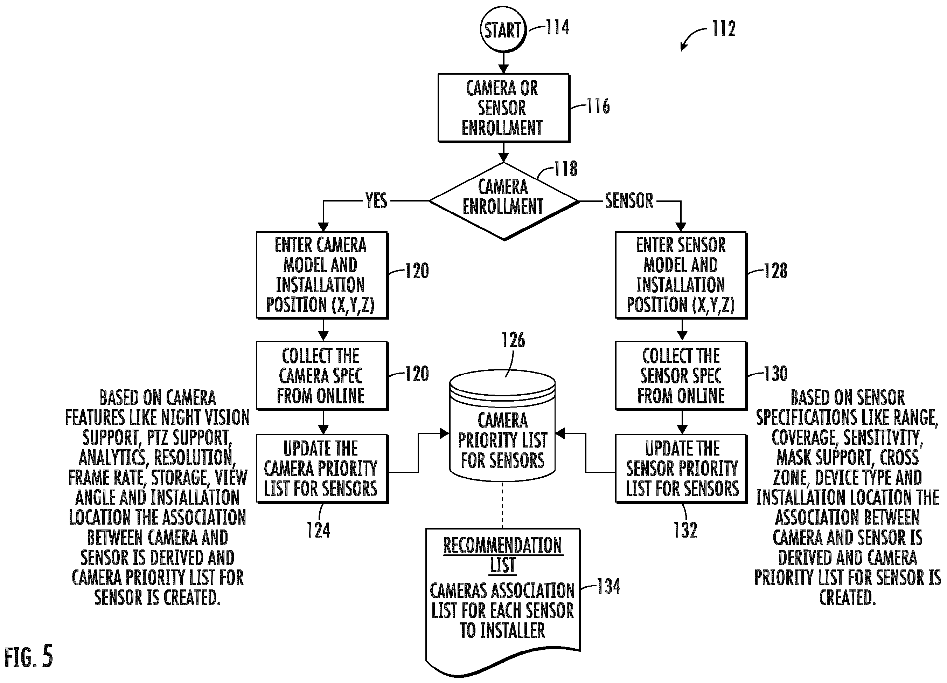

Figure 5 is a flow diagram showing an illustrative method 112. The method 112 begins at a start block 114. This may be a camera enrollment or a sensor enrollment, as indicated at block 116. At decision block 118, a determination is made as to whether this is a camera enrollment or a sensor enrollment. If a determination is made at decision block 118 that this is a camera enrollment, control passes to block 120, where the camera model and installation position are entered. Camera specifications for that particular camera model are collected, as indicated at block 122. The camera priority list is then updated, as indicated at block 124, and is provided to the camera priority list for sensors, as indicated at block 126. If a determination is made at decision block 118 that this is a sensor enrollment, control passes to block 128 where the sensor model and installation position are entered. Sensor specifications for that particular sensor model are collected, as indicated at block 130. The camera priority list is then updated, as indicated at block 132, and is provided to the camera priority list for sensors, as indicated at block 126. The camera priority list 126 communicates with a recommendation list, as indicated at block 134.

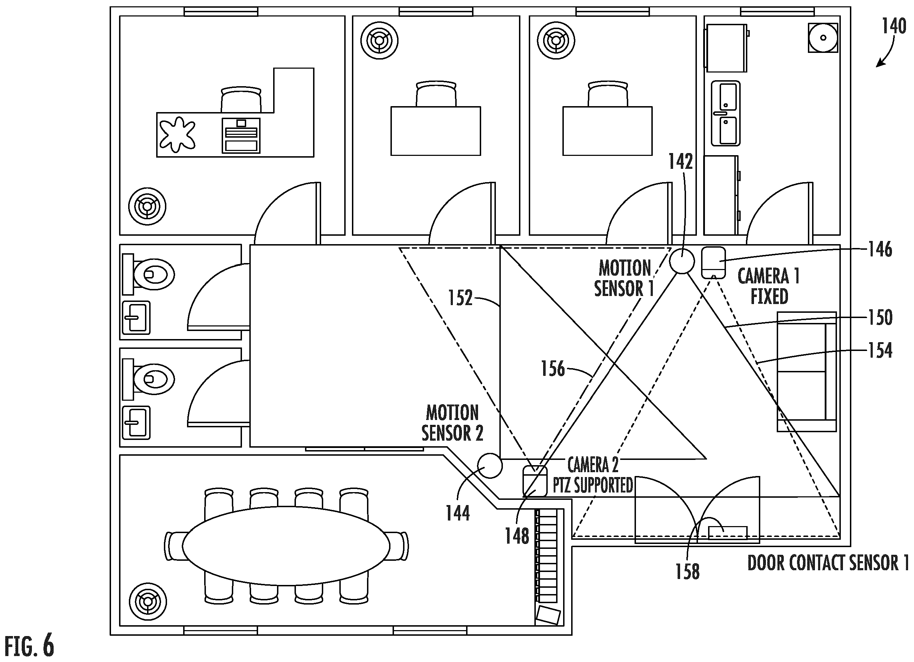

Figure 6 shows a schematic floor map 140 that includes several rooms. A particular zone includes a first motion sensor 142 and a second motion sensor 144. The particular zone also includes a first camera 146 and a second camera 148. The first camera 146 has a fixed FOV while the second camera 148 is a PTZ camera and thus has an adjustable FOV. The first motion sensor 142 has a sensor FOV 150 and the second motion sensor 144 has a sensor FOV 152. The first camera 146 has a camera FOV 154 and the second camera 148 has a camera FOV 156. There is also a door contact sensor 158. A camera priority list may be generated by the recommendation engine 38. For example, even though the second camera FOV 156 does not overlap with the first motion sensor 142, but may become the second priority camera for the first motion sensor 142 because the second camera 148 has PTZ capabilities and thus could be used to confirm an alarm of the first motion sensor 142. The following table provides illustrative factors that may be used to determine the camera associations and camera priorities for each of the motion sensors:

| **Sensor** | **Camera's priority** | **Priority based on** |
|---|---|---|
| PIR 1 (Motion Sensor 1) | | • FOV highly overlaps |
| | | • Frame rate higher |
| | | • People recognition analytics |
| | | • High Resolution |
| | Camera 1 | • No PTZ support |
| | | • FOV partially overlaps |
| | | • Frame rate is medium |
| | | • No Analytics |
| | | • High resolution |
| | Camera 2 | • PTZ support |
| PIR 2 (Motion Sensor 2) | | • FOV highly overlaps |
| | | • Frame rate is medium |
| | | • No Analytics |
| | | • High resolution |
| | Camera 2 | • PTZ support |
| | | • FOV partially overlaps |
| | | • Frame rate higher |
| | | • People recognition analytics |
| | | • High Resolution |
| | Camera 1 | • No PTZ support |

The following table provides the sensor/camera parameters that can be extracted by the AI based Language model for each of the sensors and cameras and auto populated during the configuration, which may help reduce errors during setup, installation and upgrade of the security system:

| **Sensors/Cameras** | **Parameters** | **Description** |
|---|---|---|
| PIR | Mask Detection | The sensor is covered/masked by spray, paper, tape, or film to avoid detection. |
| | Smart Contact | Sensor will send the detection state only when the controller/area in Armed state. |
| Fire | Low/High Sensitivity | Will inform the sensor sensitivity is affected due to covered by dust or hardware issues need maintenance or replacement. |
| Seismic | External Test | The seismic sensor has the ability to support external test by a vibration simulator to make sure the sensor is functional. |
| | Internal Test | The seismic sensor has the ability to support internal test by Test pulse to make sure the sensor is functional. |
| | Sensitivity | Low/Medium/High |
| | Mode | Displacement/Acceleration/Vibration |
| Glass Break | Sensitivity | Low/Medium/High |
| | Dual Mode | To detect an alarm the flex signal must be followed by an audio signal within a prescribed time frame. |
| Camera | Analytics | Type of video analytics (related to intrusion detection) available in the camera like trip wire, pattern recognition, loitering, weapon detection and etc., |
| | PTZ | Capability to pan (rotate), tilt (move lens up or down) and zoom (zoom in or out) the camera. |
| | Resolution | The level detail contained in the image. |
| | Privacy Masking | Cameras which are used to protect personal privacy by concealing parts of the image from view with a masked area. |
| | Frame Rate | Frame rate is the measurement of how quickly a number of frames appears within a second. |
| | Night Vision | This feature helps to take the images during the night or in dark places. |

| | | |
|---|---|---|
| These parameters may be used to create/update the sensor/camera associations. | | |

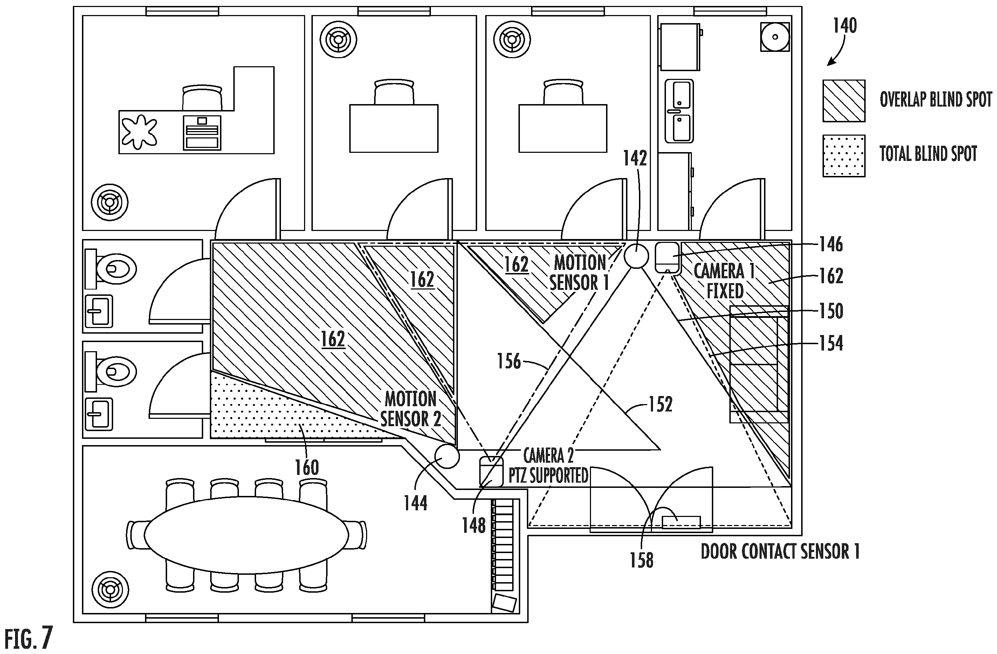

Figure 7 shows the floor map 140 as before, but has been annotated to show blind spots within part of the floor map 140. As can be seen, there is a blind spot 160 in which there is no sensor coverage and no camera coverage. There are several overlap blind spots 162 that show where the cameras can see but the sensors cannot see. There may be a desire to either move sensors and/or cameras, or add additional sensors and/or cameras in order to reduce the blind spot 160 and the overlap blind spots 162. It is contemplated that the recommendation engine 38 may make recommendations on where to add or move a sensor and/or camera to reduce and/or eliminate these blind spots, along with desired sensor and/or camera characteristics and/or parameters.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for automatically configuring a sensor-camera association between each of a plurality of sensors (12a-12c) and one or more of a plurality of cameras (16a-16c) of a security system of a facility, the method comprising:
a controller (14) receiving a floor map of at least part of the facility, the floor map identifying a physical mounting location of each of the plurality of sensors and each of the plurality of cameras of the security system;
the controller receiving one or more sensor characteristics of each of the plurality of sensors;
the controller receiving one or more camera characteristics of each of the plurality of cameras;
the controller defining a sensor Field Of View (FOV) of each of the plurality of sensors relative to the floor map based at least in part on the one or more sensor characteristics;
the controller defining a camera Field Of View (FOV) of each of the plurality of cameras relative to the floor map based at least in part on the one or more camera characteristics;
for each of the plurality of sensors, the controller determining a degree of overlap between the respective sensor FOV and each camera FOV of the plurality of cameras;
the controller determining the sensor-camera association between each sensor of the plurality of sensors and one or more of the plurality of cameras based at least in part on the degree of overlap between the sensor FOV of the respective sensor and each camera FOV of the plurality of cameras;
storing the sensor-camera association for subsequent use by the security system; and
wherein during subsequent use of the security system, and in response to a particular sensor of the plurality of sensors detecting an alarm condition in the facility, the security system referencing the sensor-camera association to identify one or more cameras of the plurality of cameras of the security system that are associated with the particular sensor, and automatically displaying a video stream captured by one or more of the cameras that are associated with the particular sensor on an operator console (22) of the security system.

2. The method of claim 1, comprising:
changing a configuration of the security system, wherein changing the configuration of the security system includes one or more of:
adding a camera to the security system at a corresponding physical mounting location in the facility;
adding a sensor to the security system at a corresponding physical mounting location in the facility;
removing and/or disabling a camera of the security system;
removing and/or disabling a sensor of the security system;
moving a camera of the security system to a new physical mounting location in the facility;
moving a sensor of the security system to a new physical mounting location in the facility;
changing one or more settings of a camera of the security system;
changing one or more settings of a sensor of the security system;
swapping out a camera of the security system for a different camera having different camera characteristics;
swapping out a sensor of the security system for a different sensor having different sensor characteristics;
after changing the configuration of the security system, the controller automatically:
receiving the floor map of at least part of the facility, the floor map identifying the physical mounting location of each of the plurality of sensors and each of the plurality of cameras of the security system;
receiving one or more sensor characteristics of each of the plurality of sensors;
receiving one or more camera characteristics of each of the plurality of cameras;
defining a sensor Field Of View (FOV) of each of the plurality of sensors relative to the floor map based at least in part on the one or more sensor characteristics;
defining a camera Field Of View (FOV) of each of the plurality of cameras relative to the floor map based at least in part on the one or more camera characteristics;
for each of the plurality of sensors, determining a degree of overlap between the respective sensor FOV and each camera FOV of the plurality of cameras;
updating the sensor-camera association between each sensor of the plurality of sensors and one or more of the plurality of cameras based at least in part on the degree of overlap between the sensor FOV of the respective sensor and each camera FOV of the plurality of cameras; and
storing an updated sensor-camera association for subsequent use by the security system.

3. The method of either of claims 1-2, comprising: receiving by an Artificial Intelligence (AI) language model (24):
a part number for each of the plurality of sensors;
a part number for each of the plurality of cameras;
one or more of a product manual, a data sheet and a brochure for each of the part numbers of the plurality of sensors and each of the part numbers for the plurality of cameras; and
the AI language model determining one or more of the sensor characteristics of each of the plurality of sensors and one or more of the camera characteristics of each of the plurality of cameras.

4. The method of any of claims 1-3, wherein the sensor-camera association includes an association between two or more cameras of the plurality of cameras and the particular sensor of the plurality of sensors, and wherein the sensor-camera association includes a prioritization of the two or more of the plurality of cameras that are associated with the particular sensor of the plurality of sensors.

5. The method of claim 4, wherein during subsequent use of the security system, and in response to the particular sensor of the plurality of sensors detecting the alarm condition in the facility, the security system referencing the stored sensor-camera association to identify the two or more cameras of the plurality of cameras of the security system that are associated with the particular sensor, and automatically prioritizing display of the video stream captured by the camera with a highest priority.

6. The method of claim 4, wherein the prioritization of the two or more of the plurality of cameras is based at least in part on the degree of overlap between the sensor FOV of the particular sensor and each of the two or more of the plurality of cameras that are associated with the particular sensor.

7. The method of claim 4, wherein the prioritization of the two or more of the plurality of cameras is based at least in part on one or more of the camera characteristics including one or more of:
a frame rate of each of the two or more of the plurality of cameras;
a resolution of each of the two or more of the plurality of cameras;
a PTZ functionality of each of the two or more of the plurality of cameras, if any; and
a video analytics capability of each of the two or more of the plurality of cameras.

8. The method of any of claims 1-3, wherein the controller determining the sensor-camera association between each sensor of the plurality of sensors and one or more of the plurality of cameras based at least in part on the degree of overlap between the sensor FOV of the respective sensor and each camera FOV of the plurality of cameras and one or more of the camera characteristics including one or more of:
a frame rate of each of the two or more of the plurality of cameras;
a resolution of each of the two or more of the plurality of cameras;
a PTZ functionality of each of the two or more of the plurality of cameras, if any; and
a video analytics capability of each of the two or more of the plurality of cameras.

9. The method of any of claims 1-8, comprising
the controller determining one or more parameters for each of one or more of the plurality of sensors based at least in part on one or more of the sensor characteristics;
the controller automatically populating the security system with the one or more parameters for each of one or more of the plurality of sensors; and
the security system using the one or more parameters for each of the one or more of the plurality of sensors during subsequent operation of the security system.

10. The method of claim 9, wherein the one or more parameters for each of the one or more of the plurality of sensors comprise one or more of:
a mask detection parameter;
an alarm transmit parameter;
a sensitivity parameter; and
dual sensing parameter.

11. The method of any of claims 1-10, comprising:
the controller determining one or more parameters for each of one or more of the plurality of cameras based at least in part on one or more of the camera characteristics;
the controller automatically populating the security system with the one or more parameters for each of one or more of the plurality of cameras; and
the security system using the one or more parameters for each of the one or more of the plurality of cameras during subsequent operation of the security system.

12. The method of claim 11, wherein the one or more parameters for each of the one or more of the plurality of cameras comprise one or more of:
a video analytics type parameter;
a PTZ capability parameter;
a resolution parameter;
a frame rate parameter;
a privacy masking parameter; and
a Night vision parameter.

13. The method of claim 1, comprising one or more of:
the controller determining one or more sensor-camera blind spots in at least part of the facility by identifying those regions of the floor map that are not covered by the sensor Field Of View (FOV) of any of the plurality of sensors and are not covered by the camera Field Of View (FOV) of any of the plurality of cameras;
the controller determining one or more sensor blind spots in the at least part of the facility by identifying those regions of the floor map that are not covered by the sensor Field Of View (FOV) of any of the plurality of sensors but are covered by the camera Field Of View (FOV) of at least one of the plurality of cameras; and
the controller determining one or more camera blind spots in the at least part of the facility by identifying those regions of the floor map that are covered by the sensor Field Of View (FOV) of at least one of the plurality of sensors but are not covered by the camera Field Of View (FOV) of any of the plurality of cameras.

14. The method of claim 1, comprising:
determining one or more blind spots in at least part of the facility by identifying those regions of the floor map that are not covered by the sensor Field Of View (FOV) of any of the plurality of sensors and/or are not covered by the camera Field Of View (FOV) of any of the plurality of cameras; and
displaying a recommendation on the operator console to add one or more particular sensors and/or one or more particular cameras at particular physical mounting locations in the facility based at least in part on the determining one or more blind spots.

15. A configuration tool for automatically configuring a sensor-camera association between each of a plurality of sensors (12a-12c) and one or more of a plurality of cameras (16a-16c) of a security system of a facility, the configuration tool comprising:
an input (20) receiving a floor map of at least part of the facility, the floor map identifying a physical mounting location of each of the plurality of sensors and each of the plurality of cameras of the security system;
the input receiving one or more sensor characteristics of each of the plurality of sensors;
the input receiving one or more camera characteristics of each of the plurality of cameras;
a controller (14) operative coupled to the input, the controller configured to:
define a sensor Field Of View (FOV) of each of the plurality of sensors relative to the floor map based at least in part on the one or more sensor characteristics;
define a camera Field Of View (FOV) of each of the plurality of cameras relative to the floor map based at least in part on the one or more camera characteristics;
for each of the plurality of sensors, determine a degree of overlap between the respective sensor FOV and each camera FOV of the plurality of cameras;
determine the sensor-camera association between each sensor of the plurality of sensors and one or more of the plurality of cameras based at least in part on the degree of overlap between the sensor FOV of the respective sensor and each camera FOV of the plurality of cameras;
store the sensor-camera association for subsequent use by the security system; and
wherein during subsequent use of the security system, and in response to a particular sensor of the plurality of sensors detecting an alarm condition in the facility, the security system is configured to reference the sensor-camera association to identify one or more cameras of the plurality of cameras of the security system that are associated with the particular sensor, and automatically display a video stream captured by one or more of the cameras that are associated with the particular sensor on an operator console (22) of the security system.
